# EUROPEAN PATENT APPLICATION

(11) **EP 2 050 938 A1**
(43) Date of publication of application: **22.04.2009**
(21) Application number: 07791823.3
(22) Date of filing: 02.08.2007
(51) Int. Cl.: F01P 3/20, B60H 1/08, F01N 5/02, F01P 7/16

(54) **METHOD OF CONTROLLING SYSTEM FOR QUICKLY WARMING UP ENGINE**

(30) Priority: 09.08.2006 JP 2006216580
(71) Applicant: Calsonic Kansei Corporation, Saitama-shi, Saitama 331-8501 (JP)
(72) Inventor: KIMURA, Satoshi, Saitama 3318501 (JP); HORI, Ryoichi, Saitama 3318501 (JP); NAKAJIMA, Shiro, Saitama 3318501 (JP); MATSUDAIRA, Norimitsu, Saitama 3318501 (JP)
(74) Representative: Oxley, Robin John George
(86) International application number: PCT/JP2007/065143
(87) International publication number: WO 2008/018353

(57) **Abstract**

An engine rapid warm-up system includes cooling water circulating through an engine 1, a radiator 2 introducing the cooling water to be cooled, a heat accumulator 3 storing the cooling water heated by the engine 1, and a pipe 6 and a water pump 7 that circulate the cooling water through the engine 1, the radiator 2 and the heat accumulator 3. In the system, high temperature cooling water that is stored in the heat accumulator 3 is controlled to be sent to and warm up the engine 1 at engine start, heat of exhaust gas is controlled to recover so that the cooling water obtained after heat recovery is circulated through and warms up the engine 1.

## Description

### [TECHNICAL FIELD]

The present invention relates to a control method of an engine rapid warm-up system, and particularly it relates to a control method of an engine rapid warm-up system that effectively warms up an engine by utilizing high temperature cooling water stored in a heat accumulator and recovering heat of exhaust gas at engine start and circulate the cooling water through both of the heat accumulator and a radiator after engine warm-up.

### [BACKGROUND OF THE INVENTION]

In general, in a water cooled engine of a motor vehicle, cooling water that is cooled down by a radiator is supplied to the water cooled engine through a cooling water supply passage, and the cooling water that is heated by the engine is returned through the cooling water return passage to the radiator, where the cooling water is cooled down due to heat transfer between the cooling water and the open air.
In such a water cooled engine, there is a problem in that startability of the engine deteriorates because the engine is cooled down to the same temperature as the outside air temperature while a motor vehicle is parked during the winter season and in a cold region. In addition, there is another problem in that fuel efficiency thereof decreases because it takes time to rise the temperature of the engine up to an appropriate one at cold-start of the engine. For instance, in an engine equipped with an electronic fuel injection system, the engine is maintained to run in a state where idle speed thereof is high, so that the fuel efficiency deteriorates.
In order to solve these problems, as a cooling system device to accelerate warm-up of the water cooled engines, Japanese Patent Application Laid-Open No. 2002 - 195035 discloses a technology in which a heat accumulator is disposed in a cooling water circuit to insulate and store the heat of cooling water that circulates through the engine, and high-temperature cooling water that is stored in the heat accumulator is introduced in the engine to accelerate the warm-up of the engine.
In the technology described in this patent application, the high-temperature cooling water of the engine that enters the heat accumulator is stored therein, being kept warm while the motor vehicle is parked. The high-temperature engine-cooling water in the heat accumulator is supplied to the engine to rapidly warm up the engine and a passenger compartment.

### [DISCLOSURE OF THE INVENTION]

### [PROBLEM(S) TO BE SOLVED BY THE INVENTION]

The technology disclosed in the patent application, however, cannot avoid reduction in the temperature of the cooling water in the heat accumulator over time because of the limit of capacity of the heat accumulator, although the high-temperature cooling water stored in the heat accumulator can warm up the engine.
The temperature of the cooling water gradually increases after the engine start, but it still takes a certain time to reach to an appropriate temperature.
The present invention is made to solve the above-described problems, and its object is to provide a control method of an engine rapid warm-up system that can warm up an engine more effectively at engine start and store high-temperature cooling water, cooling the engine, after warm-up of the engine.

### [MEANS FOR SOLVING THE PROBLEMS]

A control method of an engine rapid warm-up system includes cooling water circulating through an engine, a radiator introducing the cooling water to be cooled, a heat accumulator storing the cooling water heated by the engine, and a pipe and a water pump that circulate the cooling water through the engine, the radiator and the heat accumulator. The high temperature cooling water that is stored in the heat accumulator is controlled to be sent to and warm up the engine at engine start, and heat of exhaust gas is controlled to recover so that the cooling water obtained after heat recovery is circulated through and warms up the engine.

### [EFFECT OF THE INVENTION]

In the control method of the engine rapid warm-up system, the control method is constructed so that the high temperature cooling water is stored in the heat accumulator is sent to the engine to warm up the engine. Therefore, the high temperature cooling water can accelerate the warm-up of the engine, so that the engine can be surely started during the winter season and in cold regions.
In addition, the control method is constructed so that the heat of the exhaust gas is recovered after the engine start, and the high temperature cooling water obtained after the heat recovery is circulated to the engine. Therefore, the high temperature cooling water can rise the temperature of the engine to an appropriate temperature in early stage. In a case of using an engine with an electronic fuel injection, an idle engine speed can early be kept stable, its fuel efficiency being improved.

### [BRIEF DESCRIPTION OF THE DRAWINGS]

The objects, features and advantages of the present invention will become apparent as the description proceeds when taken in conjunction with the accompanying drawings, in which:
FIG. 1 is a schematic diagram illustrating an engine rapid warm-up system to which a control method of an embodiment according to the present invention is applied;
FIG. 2 is a schematic diagram illustrating a flow direction of cooling water in the engine raid warm-up system shown in FIG. 1 at engine start;
FIG. 3 is a schematic diagram illustrating the flow direction of the cooling water in the engine rapid warm-up system shown in FIG. 1 immediately after the engine start;
FIG. 4 is a schematic diagram illustrating the flow direction of the cooling water in the engine rapid warm-up system shown in FIG. 1 in a state where a heart recovery circuit is activated;
FIG. 5 is a schematic diagram illustrating the flow direction of the cooling water in the engine rapid warm-up system shown in FIG. 1 when a motor vehicle is running;
FIG. 6 is a schematic diagram illustrating the flow direction of the cooling water in the engine rapid warm-up system shown in FIG. 1 in a state where the heat recovery circuit is not activated;
FIG. 7 is a schematic diagram illustrating the engine rapid warm-up system shown in FIG. 1 in a state where the motor vehicle is stopped;
FIG. 8A is a left half portion of a time chart illustrating an operation of the control method carried out in the engine rapid warm-up system of the embodiment, FIG. 8B is a right half portion of the tine chart; and
FIG. 9 is a flow chart illustrating the operation of the control method carried out in the engine rapid warm-up system of the embodiment.

### [DESCRIPTION OF REFERENCE NUMBERS]

- 1: engine
- 2: radiator
- 3: heat accumulator
- 4: heat recovery device
- 5: heater core
- 6: pipe
- 7: water pump
- 8: transmission
- 9: exhaust manifold
- 10: exhaust pipe
- 11: catalyst
- 12: cooling circuit
- 13: rapid warm-up circuit
- 14: heat recovery circuit
- 15: heat circuit
- 16: thermostat
- 17: bypass pipe
- 18: exhaust gas valve

### [BEST MODE FOR CARRYING OUT THE INVENTION]

Hereinafter, an embodiment according to the present invention will be described with reference to the accompanying drawings.

### [FIRST EMBODIMENT]

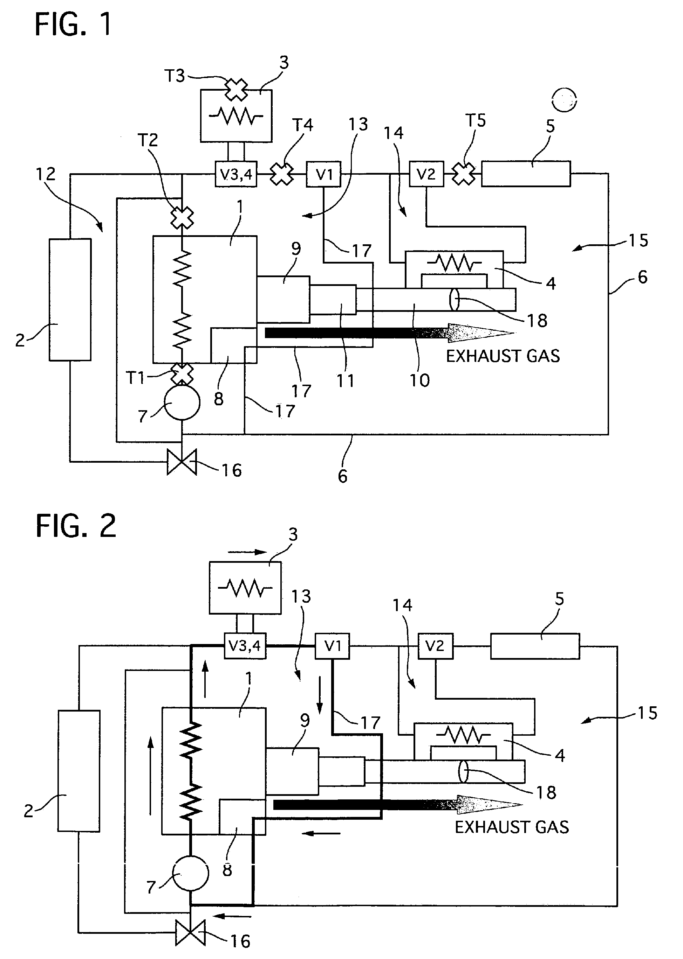

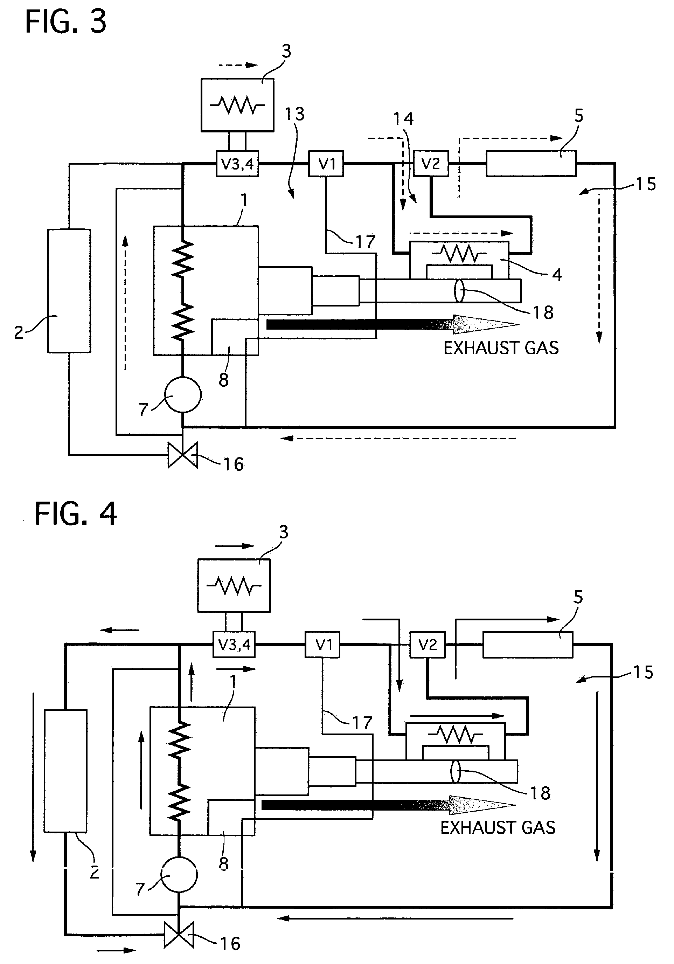

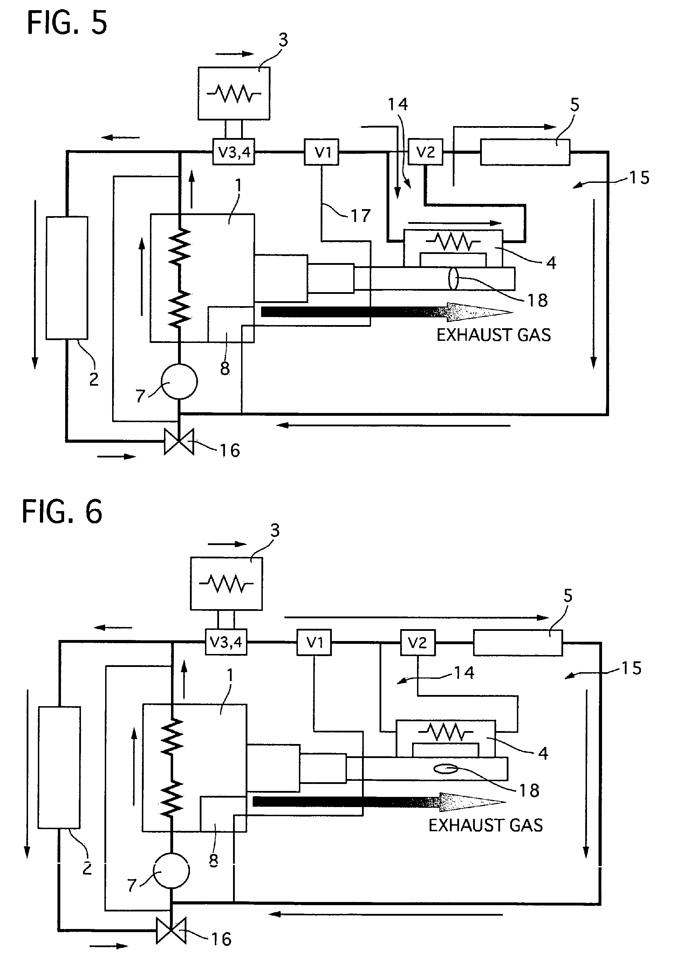

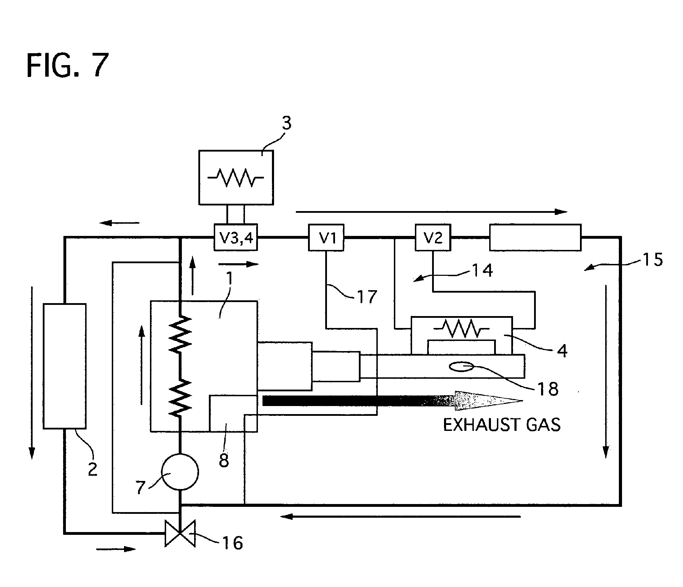

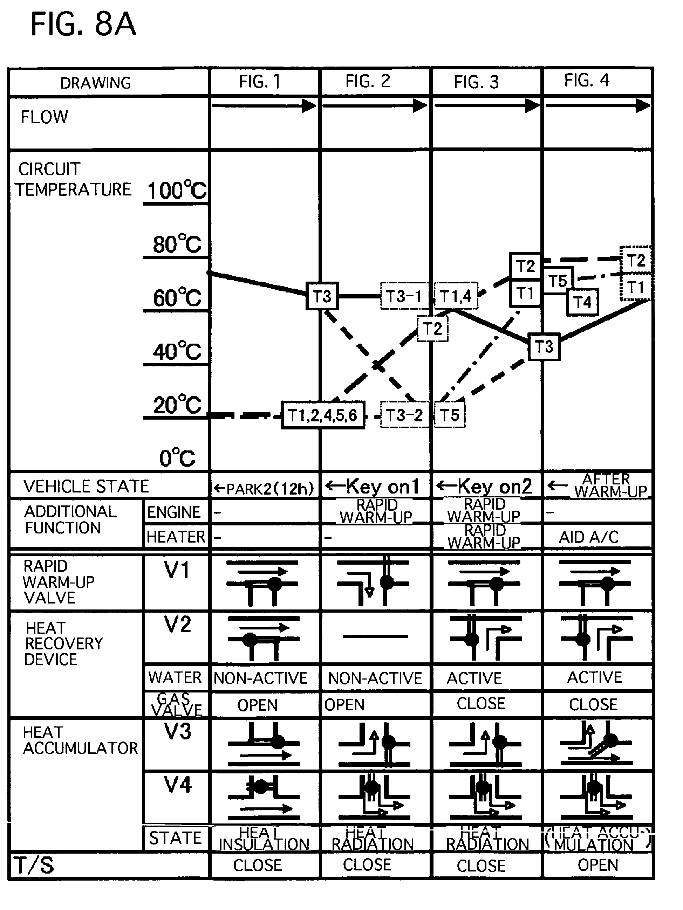

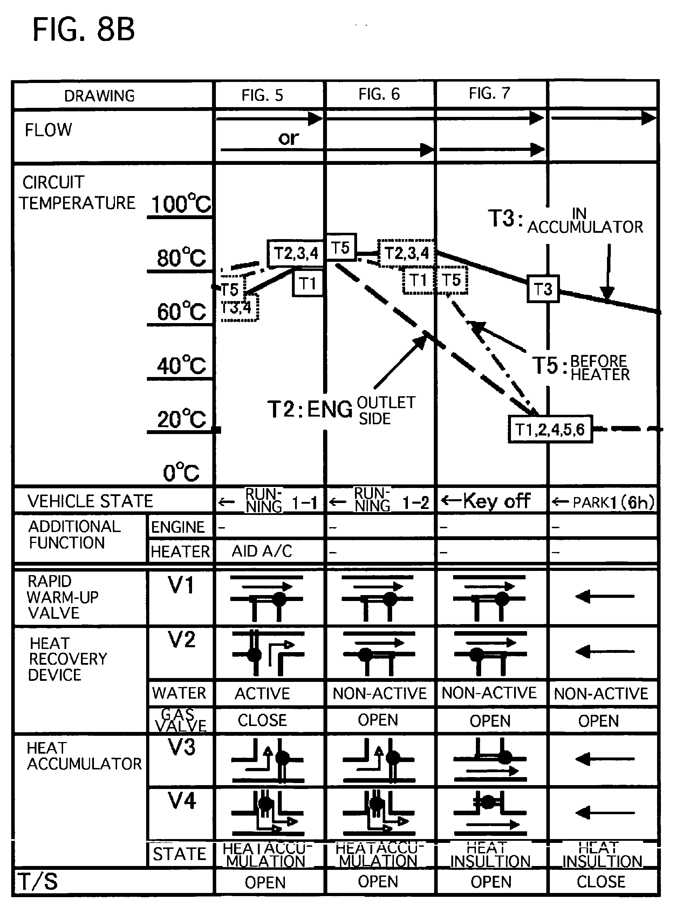

FIG. 1 is a schematic diagram illustrating an engine rapid warm-up system to which a control method of an embodiment according to the present invention is applied, FIG. 2 is a schematic diagram illustrating a flow direction of cooling water at engine start, FIG. 3 is a schematic diagram illustrating the flow direction of the cooling water immediately after the engine start, FIG. 4 is a schematic diagram illustrating the flow direction of the cooling water in a state where a heart recovery circuit is activated, FIG. 5 is a schematic diagram illustrating the flow direction of the cooling water when a motor vehicle is running, FIG. 6 is a schematic diagram illustrating the flow direction of the cooling water in a state where the heat recovery circuit is halted, FIG. 7 is a schematic diagram illustrating the engine rapid warm-up system in a state where the motor vehicle is stopped, and FIGS. 8A and 8B are a time chart illustrating an operation of the control method executed in the engine rapid warm-up system of the embodiment. Incidentally, in FIG. 1 to FIG. 7, although exhaust gas actually flows in an exhaust pipe, a flow direction thereof, which is indicated by an arrow, is illustrated beneath the exhaust pipe for the purpose of convenience to facilitate visualization of the drawing.

First, a construction of an engine rapid warm-up system to which a control method of the embodiment is applied will be described.
As shown in FIG. 1, the engine rapid warm-up system mainly includes an engine 1 that employs an internal combustion engine of a motor vehicle, a radiator 2 for cooling water that circulates between the radiator 2 and the engine 1, a heat accumulator 3 for accumulating the cooling water that is heated by the engine 1, a heat recovery device 4 and a passenger-chamber warming heat core 5 that are connected with a downstream side of the heat accumulator 3, a pipe 6 for circulating the cooling water among them, and a water pump 7 for pressure-feeding the cooling water.

The engine 1 is provided with a transmission 8, and exhaust ports thereof is connected with an exhaust manifold 9, which collects the exhaust gas discharged from the engine 1 to flow it to an exhaust pipe 10. In the exhaust pipe 10, a catalyst 11 is disposed to purify the exhaust gas.

The pipe 6 is provided with first and second valves V1 to V2, which are controlled by a not-shown control device based on a temperature of the cooling water that is detected by a sensor.

As shown in FIG. 1, the engine rapid warm-up system further includes a cooling circuit 12 for circulating the cooling water cooled down by the radiator 2 to the water cooled engine 1, a rapid warm-up circuit 13 for supplying the high temperature cooling water from the heat accumulator 3 to the engine 1, a heat recovery circuit 14 for recovering the heat of the exhaust gas, and a heater circuit 15 for warming up the passenger compartment.

In the cooling circuit 12, the cooling water that is warmed up by the engine 1 is pressure-fed by the water pump 7, and the cooling water is supplied again to the engine 1 after being cooled. The water pump 7 is driven by motive energy of the engine 1 to circulate the cooling water to branch pipes of each circuit.
The cooling circuit 12 is provide with a thermostat that activates in response to the temperature of the cooling water, and it controls a flow amount of the cooling water to be supplied from the engine 1 to the radiator 2 according to the temperature of the cooling water that passes therethrough. Thus the temperature of the cooling water is maintained at a predetermined temperature. The thermostat (T/S) 16 employs a mechanical one, an electronic one and others, and its operation is controlled by the control device as well as the first and fourth valves V1 to V4.

In the rapid warm-up circuit 13, the cooling water that is stored in the heat accumulator 3 to be kept warm flows through the first valve V1 to be separated to a bypass pipe 17, and it circulates between the heat accumulator 3 and the engine 1 through the third and fourth valves V3 and V4.
The first valve V1 is a shift valve that is provided at a branch pipe connected with the bypass pipe 17, so as to shift between a passage for flowing the cooling water to the bypass pipe 17 and a passage for flowing the cooling water to the heater circuit 15 side.
The third valve V3 is a valve for opening and closing an inlet port of the heat accumulator 3, and the fourth valve V4 is a valve for opening and closing an outlet port of the heat accumulator 3. The third and fourth valves V3 and V4 control the cooling water to be flown in, discharged or stored.

The heat accumulator 3 is a tank of a heat insulation structure having a lagging material, a heat insulator, a vacuum part and others so as to fulfill a function of storage of the high temperature cooling water.

In the engine rapid warm-up system to which the control method is applied, the cooling water flows in the rapid warm-up circuit 13 from the engine 1, and it is supplied again to the engine 1 through the first, third and fourth valves V1, V3 and V4 to warm up the engine 1.

The heat recovery circuit 14 is provided at a downstream side of the first valve V1 that is connected with the heat accumulator 3, and it has the heat recovery device 4 of the exhaust gas to recover the heat by closing an exhaust gas valve 18 in the exhaust pipe 10 to flow the exhaust gas to the heat recovery device 4. A branch of the cooling water to the heat recovery circuit 14 is shifted by the second valve V2.
At a downstream side of the heat recovery circuit 14, the heater core 5, corresponding to a heat exchanger used for air-heating, of an air conditioning device of the motor vehicle is provided, and it heat-exchanges between the cooling water and the air that is sent from a not-shown air-conditioner blower to warm up the air to be supplied to the passenger compartment.

The branch pipe of the bypass pipe 17 is connected with a downstream side of the heat accumulator 3, and the heat recovery circuit 14 and the heater circuit 15 are connected with a downstream side of the branch pipe. Branch-pipe shifting control of the bypass pipe 17 and open-close control of the heat recovery circuit 14 are carried out according to a temperature change of the cooling water caused due to engine activation.

Next, the engine rapid warm-up control method of the embodiment will be described with reference to the drawings of FIGS. 1 to 7 and time chart shown in FIGS. 8A and 8B.
Incidentally, in the following description of the time chart, T1, T2, T3, T4 and T5 are engine inlet-port temperature (T1), engine outlet-port temperature (T2), heat-accumulator internal temperature (T3), heat-accumulator outlet-port temperature (T4) and heater-core inlet-port temperature (T5), respectively.

FIG. 1 shows a state where the motor vehicle is stopped, where the temperature of the cooling water in the heat accumulator 3 indicates high, approximately 70°C, while the engine outlet-port temperature (T2) and the heater-core inlet-port temperature (T5) indicate normal temperature, approximately 20°C.
In this state, the third and fourth valves V3 and V4 of the heat accumulator 3 are closed, so that the high temperature cooling water is stored in a tank of the heat accumulator 3.

FIG. 2 shows a state where the engine 1 is started (an ignition key is turned ON) in a case where the heat-accumulator internal temperature (T3) is high, the control device controls the third and fourth valves V3 and V4 to open and send the high temperature cooling water from the heat accumulator 3 at the same instant of the engine start, and it also controls the first valve V 1 to shift to the rapid warm-up circuit 13 so that the high temperature cooling water stored in the heat accumulator 3 is supplied to the engine 1 through the bypass pipe 17.
Herein, the heat-accumulator internal temperature (T3) and the heater-core inlet-port temperature (T5) remain at the substantially same level, while the engine outlet-port temperature (T2) gradually rises.

FIG. 3 shows a case where the heat-accumulator internal temperature (T3) reduces from a state shown in FIG. 2. Specifically, the cooling water flows in the heat accumulator 3 from the engine 1, and as a result the heat-accumulator internal temperature (T3) reduces. In a state shown in FIG. 3, the third and fourth valves V3 and V4 are opened to send the high temperature cooling water from the heat accumulator 3 similarly to the state shown in FIG. 2, while the second valve V2 of the heat recovery circuit 14 is shifted so that the exhaust gas valve 18 is closed to introduce the exhaust gas to the heat recovery device 4 so as to recover the heat.
Due to this heat recovery, the temperature of the cooling water stored in the heat accumulator 3 rises, and the heater-core inlet-port temperature (T5) and the engine outlet-port temperature (T2) gradually rise. In this operation, the first valve V1 is controlled to flow the high temperature cooling water to the heat recovery device 4.
In other words, the cooling water circulates between the heater circuit 15 and the engine 1 after the heat is recovered, thereby aiding the warming-up of the passenger compartment and the engine 1.

FIG. 4 shows a state where certain time has passed since the engine start and the heat-accumulator internal temperature (T3) is not sufficiently high. In this state, opening positions of the first, second and fourth valves V1, V2 and V4 are the same as those in FIG. 3, so that the temperature of the cooling water is increased by the heat recovery device 4, while the third valve V3 of the heat accumulator 3 is partly opened, which is different from the state shown in FIG. 3.
The partial open of the third valve V3 gradually interchanges the high temperature cooling water stored in the heat accumulator 3.
In this state, the cooling water is also controlled to be sent from the engine 1 to the radiator 2 according to the temperature of the cooling water.

FIG. 5 and FIG. 6 show a state where the motor vehicle is running. In FIG. 5, the opening positions of the first and fourth valves V1 and V4 are the same as those shown in FIG. 4. The cooling water is supplied to the heater core 5 to aid the warm-up of the passenger compartment by passing though the heat recovery circuit 14.
The opening positions of the first, third and fourth valves V1, V3 and V4 are the same as those shown in FIG. 5. In this state, the temperature of the cooling water reaches to a considerably high temperature, the second valve V2 of the heat recovery circuit 14 is closed, and the exhaust gas valve 18 is opened to close the heat recovery circuit 14.
In the states shown in FIG. 5 and FIG. 6, the cooling water is also returned to the radiator 2.

FIG. 7 shows a state where the engine 2 is stopped (the ignition key is turned OFF), the circulation of the cooling water in each pipe is stopped, and the third and fourth valves V3 and V4 of the heat accumulator 3 are closed to store the high temperature cooling water in the heat accumulator 3. The heat-accumulator internal temperature reduces as time passes.

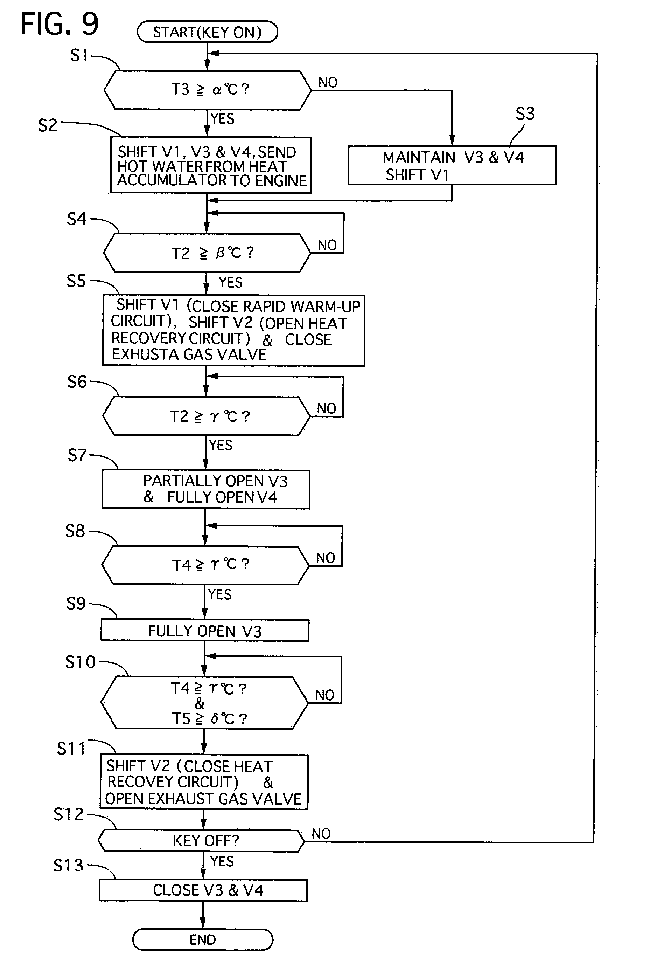

Next, FIG. 9 shows a time chart of the control method, of the engine rapid warm-up system, that is carried out by the control device.
When the engine 1 is started by the operation of the ignition key, at step S1, it is judged whether or not the heat-accumulator internal temperature (T3) detected by the sensor is equal to or more than a predetermined heat storage threshold temperature α°C. If the heat-accumulator internal temperature (T3) is equal to or more than the predetermined heat storage threshold temperature α°C, the flow goes to step S2, while, if the heat-accumulator internal temperature (T3) is less than the predetermined heat storage threshold temperature α°C, the flow goes to step S3.

At the step S2, the first, third and fourth valves V1, V3 and V4 are shifted, so that the high temperature cooling water stored in the heat accumulator 3 is supplied. Specifically, the first valve V1 is shifted to the rapid warm-up circuit to send the cooling water in the heat accumulator 3 to the engine 1 through the bypass circuit 17 so as to warm up the engine 1. Then, the flow goes to step S4.

At the step S3, the third and fourth valves V3 and V4 are closed and only the first valve V 1 is shifted, so that the cooling water circulates through the bypass circuit 17. In other words, in the state of the valves shown in FIG. 1 (refer to FIGS . 8A and 8B), only the first valve V1 is shifted to the state shown in FIG. 2 (refer to FIGS. 8A and 8B), namely a state where the rapid warm-up circuit 13 is formed, and then the flow goes to step S4.

At the step S4, it is judged whether or not the engine outlet-port temperature T2 reaches to a predetermined hot-water threshold temperature β°C. If the engine outlet-port temperature T2 does not reach to the predetermined hot-water threshold temperature β°C, the step S4 is repeated to maintain a current state of the valves. If the engine outlet-port temperature T2 reaches to the predetermined hot-water threshold temperature β°C, the flow goes to step S5 to shift the first valve V1 to close the rapid warm-up circuit 13 and also shift the second valve V2 to open the heat recovery circuit 14. At the same time, the exhaust gas valve of the exhaust pipe 10 is closed to be shifted to the heat recovery circuit 14. Then, the flow goes to step S6.

At the step S6, it is judged whether or not the engine outlet-port temperature (T2) reaches to a hot-water threshold temperature γ°C. If the engine outlet-port temperature (T2) does not reach to the hot-water threshold temperature γ°C, the step S6 is repeated to maintain the current stage of the valves. If the engine outlet-port temperature (T2) reaches to the hot-water threshold temperature γ°C, the flow goes to step S7 so that the third valve V3 is partially opened to gradually interchange the cooling water stored in the heat accumulator 3, and the fourth valve V4 is maintained to fully open. Then, the step goes to the step S7.

At the step S8, it is judged whether or not the heat-accumulator outlet-port temperature (T4) reaches to the hot-water threshold temperature γ°C. If the heat-accumulator outlet-port temperature (T4) does not reach to the hot-water threshold temperature γ°C, the step S8 is repeated so that a current stage of the valves is maintained. If the heat-accumulator outlet-port temperature (T4) reaches to the hot-water threshold temperature γ°C, the flow goes to step S9 so that the third valve V3 is fully opened to introduce the high temperature cooling water in the heat accumulator 3. Then, the flow goes to step S10.

At the step S 10, it is judged whether or not the heat-accumulator outlet-port temperature (T4) reaches to the hot-water threshold temperature γ°C and the heater-core inlet-port temperature (T5) is equal to or more than a heater set temperature δ°C. If these conditions are not satisfied, the step S10 is repeated so that a current stage of the valves is maintained. If the conditions are not satisfied, the flow goes to step S 11.

At the step S11, the second valve V2 is shifted to close the heat recovery circuit 14, and the exhaust gas valve 18 is opened to open the exhaust pipe 10. Then, the flow goes to step S12.

At the step S12, it is judged whether or not the ignition key is turned OFF. If it is not OFF, the flow returns to the step S1, while, if it is OFF, the engine is stopped and the flow goes to step S13.

At the step S13, the third and fourth valves V3 and V4 are closed so that the high temperature cooling water is stored in the heat accumulator 3, and then the control ends.

Next, the effects of the control method of the engine rapid warm-up system of the embodiment will be described.
In the embodiment, the control method is constructed so that the high temperature cooling water stored in the heat accumulator 3 is supplied to the engine 1 to warm the engine 1, which accelerates the warm-up of the engine 1, so that the engine 1 can be surely started during the winter season and in cold regions.
In addition, as the control method is constructed so that the heat of the exhaust gas is recovered after the engine 1 is started and the cooling water obtained after the heat is recovered is circulated to the engine 1 to further warm up the engine 1, the temperature of the engine 1 can rise up to the appropriate temperature in its early stage. In a case of using an engine with an electronic fuel injection, an idle engine speed can be early kept stable, its fuel efficiency being improved.

As the control method is constructed so that the heat of the exhaust gas is recovered after the engine 1 is started and the cooling water obtained after the heat recovery is circulated between the heater circuit 15 and the engine 1, both of the passenger compartment and the engine 1 can be early warmed up after the engine start.

Further, as the control method is constructed so that the high temperature cooling water is sent from the heat accumulator 3 to the engine 1 through the bypass pipe 17 at the engine start, energy loss due to heat radiation can be suppressed, and the high temperature cooling water can be immediately introduced to the engine 1.

Further, as the branch pipe of the bypass pipe 17 is connected with the downstream side of the heat accumulator 3, the heat recovery circuit 14 and the heater circuit 15 being connected with the downstream side of the branch pipe, and the control method is constructed so that the branch-pipe shift control of the bypass pipe 17 and the open-close control of the heat recovery circuit 14 is executed according to the temperature change in the cooling water caused due to the engine activation, the high temperature cooling water stored in the heat accumulator 3 can be utilized at the engine start, and the heat of the exhaust gas is recovered to effectively warm up the engine 1.

Further, as the control method is constructed so that the circulation of the cooling water to the heat recovery circuit 14 after the warm-up of the engine 1, the heat recovery circuit 14 is closed and accordingly a function of cooling the engine 1 is mainly carried out.

Further, as the control method is constructed so that the high temperature cooling water is circulated to the radiator 2 to be cooled and the high temperature cooling water is circulated to the heat accumulator 3, the heat accumulator 3 can be always supplied with the high temperature cooling water, so that the heat accumulator 3 can be maintained in a heat accumulation state.

While there have been particularly shown and described with reference to preferred embodiments thereof, the present invention is not limited to the above-described embodiments, and its design changes and modifications are contained in the present invention as long as they do not deviate the subject-matter of the present invention.
For example, the control method is constructed so that the cooling water is circulated to both of the radiator 2 and the heat accumulator 3 in the embodiment, while it may be constructed so that the cooling water is circulated only to the radiator 2 in a case where the temperature of the cooling water in the heat accumulator 3 becomes high.

## Claims

1. A control method of an engine rapid warm-up system which includes a radiator for introducing cooling water that circulates through an engine, a heat accumulator for storing the cooling water that is heated by the engine, and a pipe and a water pump that circulate the cooling water through the engine, the radiator and the heat accumulator, the control method
**characterized in that**
the cooling water that is stored in the heat accumulator at high temperature is sent to the engine to warm up the engine at engine start, wherein
heat of exhaust gas is recovered, and wherein
the cooling water obtained after heat recovery is circulated to the engine to warm up the engine.

2. The control method of the engine rapid warm-up method according to claim 1, wherein
the cooling water obtained after the heat recovery is circulated to a heater circuit to warm up a passenger chamber.

3. The control method of the engine rapid warm-up method according to claim 1 or claim 2, wherein
the cooling water is sent from the heat accumulator to the engine through the bypass pipe at the engine start.

4. The control method of the engine rapid warm-up method according to any one of claims 1 to 3, wherein
a branch pipe of a bypass pipe is connected with a downstream side of the heat accumulator, wherein
a heat recovery circuit and a heater circuit are connected with a downstream side of the branch pipe, and wherein
branch-pipe shift control of the bypass pipe and open-close control of the heat recovery circuit are carried out according to temperature change in the cooling water caused due to engine activation.

5. The control method of the engine rapid warm-up system according to any one of claims 1 to 4, wherein
circulation of the cooling water to a heat recovery circuit is halted after warm-up of the engine.

6. The control method of the engine rapid warm-up method according to any one of claims 1 to 5, wherein
high temperature cooling water is circulated to the radiator to be cooled after warm-up of the engine, and wherein
the high temperature cooling water is circulated to the heat accumulator.
